(19) Europäisches Patentamt
European Patent Office
Office européen des brevets

(11) Veröffentlichungsnummer: **0 039 826**
**A1**

(12) # EUROPÄISCHE PATENTANMELDUNG

(21) Anmeldenummer: **81103204.4**

(22) Anmeldetag: **29.04.81**

(51) Int. Cl.³: **G 21 C 19/30**

(30) Priorität: **08.05.80 DE 3017585**

(43) Veröffentlichungstag der Anmeldung:
**18.11.81 Patentblatt 81/46**

(84) Benannte Vertragsstaaten:
**AT CH FR GB IT LI**

(71) Anmelder: **BROWN BOVERI REAKTOR GmbH**
**Heppenheimerstrasse 27-29**
**D-6800 Mannheim 31(DE)**

(72) Erfinder: **Stiefel, Max, Ing. grad.**
**Thüringerstrasse 69**
**D-6800 Mannheim 31(DE)**

(54) **Verfahren und Anordnung zur Druckabsenkung im Sicherheitsbehälter einer Kernreaktoranlage.**

(57) Muß der Überdruck im Sicherheitsbehälter einer Kernreaktoranlage abgebaut werden, so wird hierzu ein Teil des gasförmigen Inhalts des Sicherheitsbehälters (1) abgezogen. Dem abgezogenen Gas wird Wasserstoff bis max. 3,5 Vol. % zugeführt. Das wasserstoffangereicherte Gas wird durch einen Rekomibator (14) geleitet, wobei ein Teil des Sauerstoffgehalts des Gases mit dem Wasserstoff unter Abscheidung von Wasser verbrennt. Das im Sauerstoffgehalt reduzierte Gas wird dem Sicherheitsbehälter (1) über das freie Ende (8) der Ringleitung (5) zugeführt. Der innerhalb des Sicherheitsbehälters herrschende Druck wird entsprechend der Sauerstoffabnahme reduziert.

EP 0 039 826 A1

COMPLETE DOCUMENT

Croydon Printing Company Ltd.

BROWN BOVERI REAKTOR GmbH
Heppenheimer Str. 27-29
6800 Mannheim 31

Mannheim, den 21.4.1981
SG 151.70 - 95/80

Verfahren und Anordnung zur Druckabsenkung im Sicherheitsbehälter einer Kernreaktoranlage.

Die Erfindung betrifft ein Verfahren zur Druckabsenkung im Sicherheitsbehälter einer Kernreaktoranlage.

Tritt in einer Kernreaktoranlage ein Störfall auf, so ist ein Ansteigen des Druckes innerhalb des Sicherheitsbehälters auf oberhalb des atmosphärischen Druckes liegende Werte nicht auszuschließen. Obwohl der Sicherheitsbehälter zur Beherrschung derartiger Drücke ausgelegt ist, werden aus Sicherheitsgründen Einrichtungen zur Druckabsenkung nach einem Störfall vorgesehen.

So ist aus der DE-AS 22 41 303 eine Anordnung bekannt, die Kühlmittel in den Sicherheitsbehälter sprüht. Diese Anordnung hat den Nachteil, daß durch eingespeistes Wasser das Volumen des Sicherheitsbehälters verkleinert wird. Eine durch die Abkühlung erzielte Druckabsenkung wird durch die Verkleinerung des Volumens wieder zunichte gemacht.

Die sich anbietende Entlüftung des Sicherheitsbehälters zur Unterdruckhaltung ist nicht statthaft, da sie der Zielsetzung einer Spaltproduktzurückhaltung widerspricht.

Es stellt sich daher die Aufgabe, ein Verfahren zur Druckabsenkung im Sicherheitsbehälter einer Kernreaktoranlage anzugeben, das ohne Einsprühen von Kühlmittel auskommt und wenig aufwendig ist.

Gelöst wird die Aufgabe erfindungsgemäß durch die Kombination folgender Merkmale:

a. Ein Teil des gasförmigen Inhalts des Sicherheitsbehälters wird abgezogen,
b. diesem Gas wird Wasserstoff bis max. 3,5 Volumen % zugeführt,
c. ein Teil des Sauerstoffgehalts des Gases wird mit dem Wasserstoff verbrannt,
d. das im Sauerstoffgehalt reduzierte Gas wird dem Sicherheitsbehälter wieder zugeführt und
e. das bei der Reaktion entstehende Wasser wird zusammen mit dem Gas dampfförmig in den Sicherheitsbehälter zurückgeführt und schlägt sich dort nieder.

Durch die Verbrennung des Sauerstoffs und die dadurch bedingte Ausscheidung von Wasser wird das Gasvolumen innerhalb des Sicherheitsbehälters auf einfache Weise verringert.

Eine Anordnung zur Durchführung des Verfahrens verwendet einen in Kernreaktoranlagen zum Wasserstoffabbau bereits vorhandenen mit einem Rückschlagventil und einem Rekombinator versehenen Kreislauf und zeichnet sich dadurch aus, daß zwischen Rückschlagventil und Rekombinator eine Wasserstoff-Zufuhrleitung angeschlossen ist. Damit wird eine einfache und kostengünstige Druckabsenkung sichergestellt. Das aufwendige und mehrfach redundant vorhandene Sprühsystem zur Druckabsenkung bei Störfällen wird eingespart.

Anhand eines Ausführungsbeispiels und einer schematischen Zeichnung wird das Verfahren und die Anordnung zur Durchführung des Verfahrens beschrieben.

Die Zeichnung zeigt den Teilbereich einer Kernreaktoranlage mit dem Sicherheitsbehälter 1, der Gebäudeteile 2 enthält in denen nichtdargestellte Komponenten der Reaktoranlage angeordnet sind. Eine Betonschale 3 umschließt den Sicherheitsbehälter und bildet mit diesem die Ringräume 4 zur Aufnahme von Hilfs- und Nebenanlagen. Eine Ringleitung 5, die mit ihren freien Enden 6,7,8 in das Innere des Sicherheitsbehälters ragt, ist jeweils an ihren Durchtrittsstellen mit einer inner- und außerhalb des Sicherheitsbehälters angeordneten Absperrarmatur 9 versehen. In der Ringleitung sind in Reihe ein Gebläse 10, eine Flammensperre 11, ein Rückschlagventil 12, ein Vorwärmer 13, ein Rekombinator 14 und ein Kühler 15 eingebaut. Zwischen dem Rückschlagventil 12 und dem Rekombinator 14 ist an der Ringleitung 5 eine Wasserstoffzufuhrleitung 16 angeschlossen. Diese Zufuhrleitung ist mit einer Wasserstoffquelle 17 verbunden, die mit einem Absperrventil 18 versehen ist. Neben einem Reduzierventil 19 und einem Regelventil 20 weist die Zufuhrleitung 16 noch zwei Druckmeßvorrichtungen 21 und eine Durchflußmeßeinrichtung 22 auf. Letztere stellt sicher, daß nicht mehr als 3,5 Volumenprozent Wasserstoff in die Ringleitung eingespeist wird. Über die freien Enden 6,7 der Ringleitung strömt das Gas in die Ringleitung ein und wird mit einem Gebläse 10 weiterbefördert. Das Gebläse bewirkt weiterhin die gute Durchmischung des über die Zufuhrleitung 16 herangeführten Wasserstoffes mit dem Gas. Der nun mit Wasserstoff angereicherte Gasstrom gelangt über einen Vorwärmer 13 zum Rekombinator 14. Es erfolgt dort eine Katalytische Verbrennung von Wasserstoff und Sauerstoff. Das im Sauerstoffgehalt reduzierte Gas gelangt über den Kühler 15 und das freie Ende 8 in den Sicherheitsbehälter zurück. Auf dem gleichen Weg gelangt das bei der Reaktion entstehende Wasser, das im dampfförmigen Zustand vorliegt, zum Sicherheitsbehälter und wird dort bzw. bereits nach dem Passieren des Kühlers 15 in der Leitung 5 niedergeschlagen.

Eine kontinuierliche Durchführung des Verfahrens bringt eine deutliche Druckreduzierung im Gasvolumen des Sicherheitsbehälters. Die Komponenten zur Durchführung des Verfahrens sind wegen der besseren Übersicht außerhalb der Betonschale 3 dargestellt. In der Regel sind diese Komponenten in den Ringräumen angebracht.

Mit einem Zahlenbeispiel wird die Wirkung des Verfahrens beschrieben. Entsprechend der bekannten Reaktion

$$2\ H_2 + O_2 \rightleftharpoons 2\ H_2O\ \text{(flüssig)}$$

sind nach der Reaktion von 1 $m^3$ $O_2$ (i.N.) noch 1609 $cm^3$ $H_2O$ übrig.

Ist der Gasinhalt trockene Luft mit einem $O_2$-Gehalt von 20,95 Vol. % wird ein $m^3$ Luft bei vollständiger Entfernung von $O_2$ durch Verbrennung mit $H_2$ auf 0,8242 $m^3$ (i.N.) verringert.

Der Restdruck ist somit auf 82,4 % des Ausgangsdruckes abgesunken. Zur sicheren Druckreduzierung genügt es in der Regel anstatt 21 Vol. % nur ca. 2 Vol. % $O_2$ mit $H_2$ zu rekombinieren. Es ergibt sich dann bereits ein Druck von ca. 98 % des Ausgangsdruckes. Bei einem Sicherheitsbehälter mit ca. 70 000 $m^3$ (i.N.) Luftinhalt sind für die vorgenannte zweiprozentige Druckabsenkung ca. 2800 $m^3$ (i.N.) $H_2$ erforderlich. Diese Menge ist z.B. in 10 Stück 28er Flaschenbündeln enthalten, deren Beschaffung bzw. Bereitstellung keine Schwierigkeiten bereitet.

Mit dem erfindungsgemäßen Verfahren wird auf überraschend einfache Weise eine gewünschte Druckabsenkung im Sicherheitsbehälter einer Kernreaktoranlage erzielt.

## Patentansprüche

1. Verfahren zur Druckabsenkung im Sicherheitsbehälter einer Kernreaktoranlage, gekennzeichnet durch die Kombination folgender Merkmale:
   a. Ein Teil des gasförmigen Inhalts des Sicherheitsbehälters wird abgezogen,
   b. diesem Gas wird Wasserstoff bis max. 3,5 Volumen % zugeführt,
   c. ein Teil des Sauerstoffgehalts des Gases wird mit dem Wasserstoff verbrannt,
   d. das im Sauerstoffgehalt reduzierte Gas wird dem Sicherheitsbehälter wieder zugeführt und
   e. das bei der Reaktion entstehende Wasser wird zusammen mit dem Gas dampfförmig in den Sicherheitsbehälter zurückgeführt und schlägt sich dort nieder.

2. Anordnung zur Durchführung des Verfahrens nach Anspruch 1 mit einer vom Sicherheitsbehälter ausgehenden und in diesen zurückführenden Ringleitung in der in Reihe ein Rückschlagventil und ein Rekombinator eingebaut ist, dadurch gekennzeichnet, daß zwischen Rückschlagventil (12) und Rekombinator (14) eine Wasserstoff-Zufuhrleitung (16) angeschlossen ist.

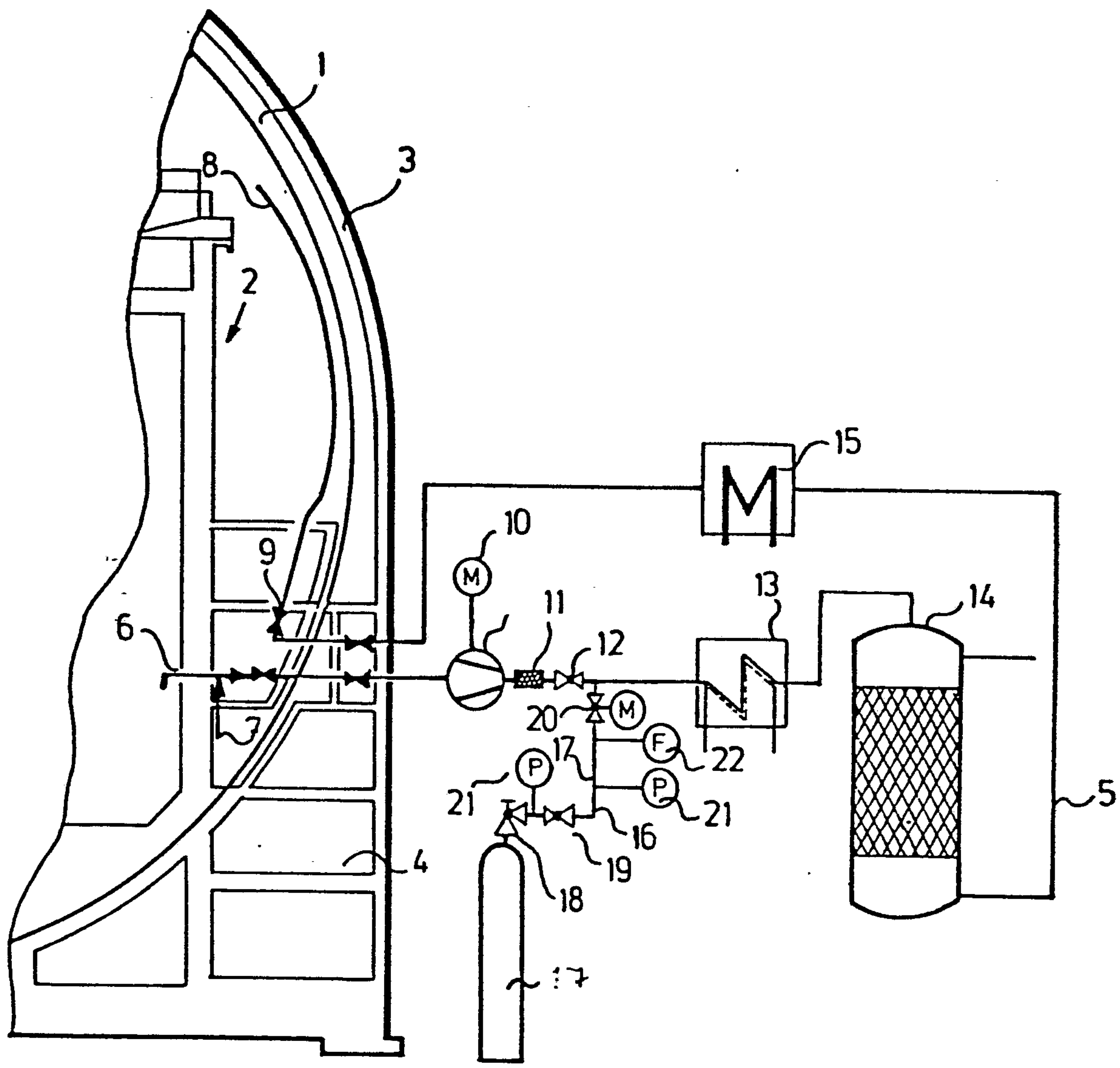
1
3
8
2
15
M
10
M
9
11
12
13
14
6
20
M
7
F
22
17
21
P
P
21
5
16
19
18
4
17

**0039826**

Europäisches Patentamt

## EUROPÄISCHER RECHERCHENBERICHT

Nummer der Anmeldung

EP 81103204.4

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 300 499 (UNIVERSAL OIL PRODUCTS)<br>+ Anspruch 1; Fig. 1,2; Seite 4 +<br>-- | 1 | G 21 C 19/30 |
| | DE - A - 2 002 542 (WESTINGHOUSE ELECTRIC CORP.)<br>+ Anspruch 2; Fig. +<br>-- | 1,2 | |
| | DE - B - 1 444 485 (SIEMENS)<br>+ Fig.; Spalte 3, Zeilen 30-36 +<br>-- | 1,2 | RECHERCHIERTE SACHGEBIETE (Int. Cl.³) |
| | DE - B - 1 069 302 (NORTH AMERICAN ARIATION)<br>+ Anspruch 1 +<br>-- | 1 | G 21 C 17/00<br>G 21 C 19/00 |
| | FR - A1 - 2 285 172 (COMMISSARIAT A L'ENERGIE ATOMIQUE)<br>+ Fig. 2; Seite 6 +<br>-- | 1,2 | |
| | FR - A - 1 528 168 (HILL)<br>+ Fig. 1,2; Seite 3, Anspruch 2b +<br>-- | 1,2 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | GB - A - 1 393 355 (WESTINGHOUSE ELECTRIC CORP.)<br>+ Fig.; Seite 2, Zeilen 28-30, 51-65 +<br>---- | 1,2 | |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 29-07-1981 | KRAL |

EPA form 1503.1 06.78